# EUROPEAN PATENT SPECIFICATION

(11) **EP 0 865 710 B1**
(45) Date of publication and mention of the grant of the patent: **07.05.2003**
(21) Application number: 96939023.6
(22) Date of filing: 13.11.1996
(51) Int. Cl.: H04Q 7/30, H04B 7/26

(54) **COMMUNICATION SYSTEM WITH BASE STATION TRANSCEIVER AND RADIO COMMUNICATION UNITS**
ÜBERTRAGUNGSSYSTEM MIT BASISSTATION-SENDEREMPFÄNGER UND FUNKÜBERTRAGUNGSEINHEITEN
SYSTEME DE COMMUNICATION PRESENTANT UN EMETTEUR-RECEPTEUR DE STATION DE BASE ET DES UNITES DE RADIOCOMMUNICATION

(30) Priority: 05.12.1995 GB 9524908
(43) Date of publication of application: 23.09.1998
(73) Proprietor: MOTOROLA LTD, Basingstoke, Hampshire RG22 4PD (GB)
(72) Inventor: BENN, Howard, Swindon, Wiltshire SN5 5AJ (GB)
(74) Representative: Ibbotson, Harold
(86) International application number: EP9604967
(87) International publication number: WO97021316

(56) References cited:
- EP-A- 0 497 083
- EP-A- 0 566 874
- EP-A- 0 590 412
- WO-A-95/05720
- WO-A-95/23463

## Description

### Background of the Invention

This invention relates, in general, to a communication system and is particularly, but not exclusively, applicable to a cellular communication system (such as a pico-cellular communication system) having a base station transceiver and multiple radio communication units responsive thereto.

### Summary of the Prior Art

In communication systems, such as the time division multiplexed (TDM) pan-European Global System for Mobile (GSM) cellular communication system and other frequency re-use systems, there is a seemingly relentless drive towards both a reduction in power consumption and a miniaturisation of infrastructure equipment.

In infrastructure equipment particularly, advances in system technology and architecture have led to increased signal processing and the necessity for arrays of dedicated Digital Signal Processors (DSPs) that consume considerable amounts of power. Consequently, housings for the infrastructure equipment have needed to be sufficiently large to facilitate cooling processes, as will be understood. Furthermore, power consumption is a major issue with respect to remotely-located, battery-powered devices, since any drain of current from the battery reduces its operational life-span.

In an attempt to reduce size, repeater stations have been developed to co-operate with (and extend the coverage provided by) Radio Channel Units (RCUs). These repeater stations contain an antenna-duplexer-amplifier chain that is coupled (via an expensive, low-loss shielded cable) to a nominal first or last amplifier stage of a transceiver of a RCU. More particularly, when considering a transmit path in a repeater station, a signal that would otherwise be directly transmitted from the RCU is instead broadcast from the antenna of the repeater station after first having been amplified to an appropriate level to compensate for any loss experienced in the shielded cable. In this way, the use of repeater stations has segregated a portion of the analog circuitry from a conventional RCU. However, this solution does not address the problems relating to power consumption and heat generation arising from, predominantly, the signal processing requirements of the RCU.

EP 0566874 discloses a base station for a cellular communication system wherein a combination of equipment parts of the base station for functions of RF-independent components in the baseband range is provided in such a way that the combination is effected at a central location within the base station concerned or in the switching equipment (base station controller, mobile switching centre).

### Summary of the Invention

According to a first aspect of the present invention there is provided a communication system in accordance with claim 1.

In preferred embodiment each processing unit of the at least one processing unit is arranged to perform multiple channel coding and multiple channel decoding.

In a second aspect of the present invention there is provided a remote radio frequency transceiver unit for reception of information signals in accordance with claim 6.

An exemplary embodiment of the present invention will now be described with reference to the accompanying drawings.

### Brief Description of the Drawings

FIG. 1 shows a prior art cellular communication system.
FIG. 2 shows a sectored site typically utilised in the prior art cellular communication system of FIG. 1.
FIG. 3 is a depiction of a prior art Radio Channel Unit (RCU), and its interface with a prior art Base Station (BS).
FIG. 4 illustrates division of a cellular communication system in accordance with a preferred embodiment of the present invention.

### Detailed Description of a Preferred Embodiment

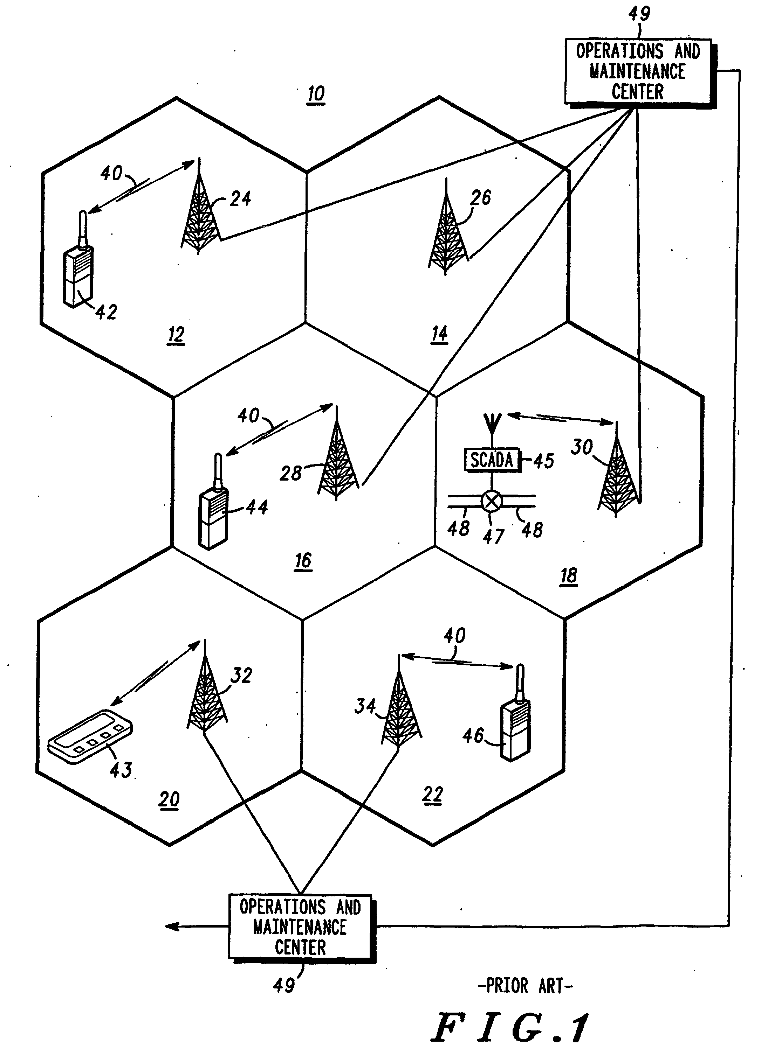

FIG. 1 shows a typical prior art cellular communications system 10 in which a coverage area is defined by a number of sites (or cells) 12-22 represented by conventional hexagonal fashion. Each site 12-22 has a base station 24-34 responsible for controlling the flow of uni-directional or bi-directional communication traffic in the respective site. Typically, the base stations 24-34 will be centrally located, although other positions may be desirable subject to surrounding terrain or propagation conditions (affected by walls of/in buildings, valleys and areas of forestation, or the like). As will be understood, each base station 24-34 may receive 38 and/or transmit 40 signals from/to communication devices 42-46 located in its coverage area. Typically, each base station (BS) 24-34 is further responsive to an operations and maintenance centre (OMC) 49 arranged to have overall system control, which OMC 49 may be either on a regional or system basis (dependent upon the size of the communications system 10). With respect to the communication devices 42-46, these may have the capacity for duplex, simplex or one-way communication, and may have either a roaming capability (allowing movement between sites) or be fixedly located. For example, communication units 42, 44 and 46 may be digital or analog cellular radiotelephones having voice or data capabilities. Indeed, cellular radio telephone 42 may provide access to a portable computer via a Personal Computer (PC) card interface or the like. Furthermore, communication unit 43 may be a radio pager, whereas communication unit 45 may be located in a Supervisory Control and Data Acquisition (SCADA) device responsible for the monitoring of a flow rate or control of a valve 47 in a pipeline 48.

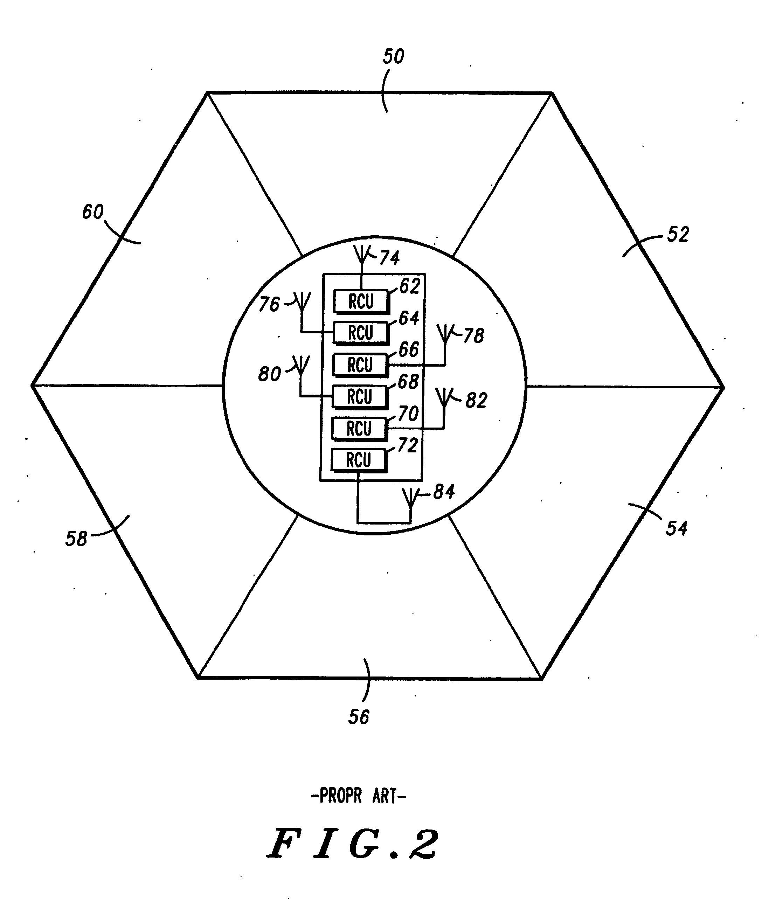

Taking a cellular telephony system by way of example, each site 12-22 of the cellular communication system 10 of FIG. 1 is typically partitioned into a plurality of operational sectors 50-60 (as shown in FIG. 2), with each sector 50-60 serviced by a radio channel unit (RCU) 62-72 and associated transmit and/or receive antennas 74-84, respectively. Usually, the operational sectors are each defined by an area serviced (covered) by a single Broadcast Control Channel (BCCH).

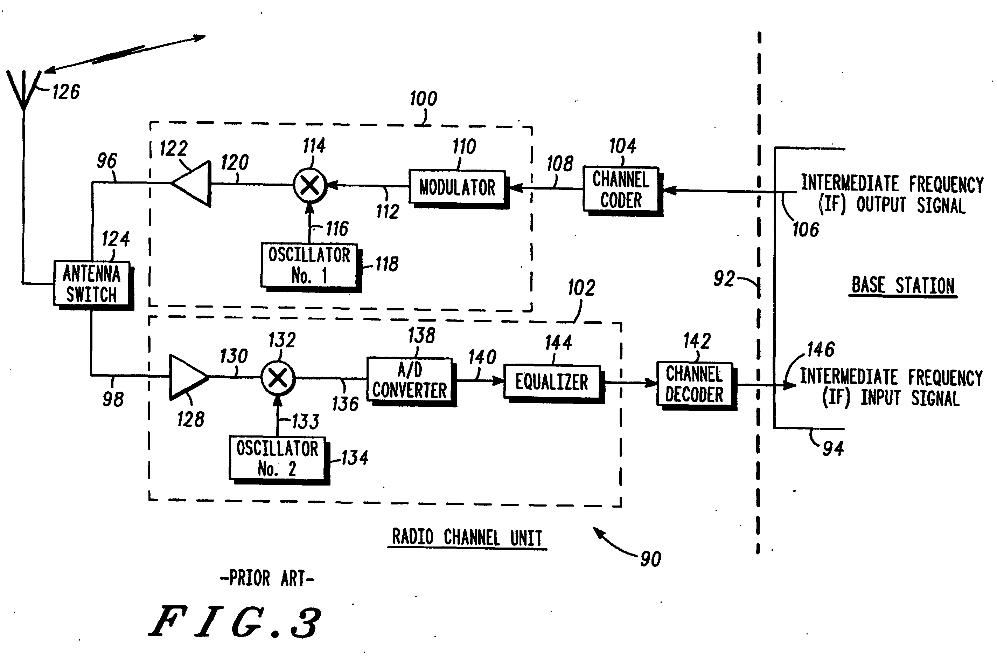

Referring to FIG. 3, a prior art Radio Channel Unit (RCU) 90 and its interface 92 with a prior art Base Station 94 is depicted. For the sake of brevity, the prior art RCU 90 shows only some of its major functional blocks, and is described in the context of a transceiver arrangement having a discrete transmitter chain 96 and a discrete receiver chain 98. With respect to the transmitter chain 96 and the receiver chain 98, each contains differing amounts of RF circuitry (identified as blocks 100 and 102, respectively).

The transmitter chain 96 of the RCU 90 comprises a channel coder 104 that is responsive to an intermediate frequency (IF) signal 106 emanating from the base station 94 (which in this case is a base station transceiver). A channel coded output signal 108 is provided to a modulator 110 which is arranged to generate a modulated output signal 112. A first mixer 114, responsive to both a first frequency signal 116 (generated by a first oscillator 118) and the modulated output signal 112, produces a signal output 120 that is subsequently amplified in amplifier 122 before being routed, via antenna switch (duplexer) 124, to an antenna 124 for transmission. In the transmitter chain 96, the RF transmit circuitry 100 is represented by modulator 110, first mixer 114, first oscillator 118 and amplifier 122.

In the receiver chain 98, a received signal is routed through the antenna switch 124 to an amplifier 128 for amplification. After amplification, a amplified received signal 130 provides a first input to a second mixer 132. A second input signal 133 (provided by a second oscillator 134) is then combined in the second mixer 132 with the amplified received signal 130. As will be appreciated, frequency f2 will typically be different to frequency f1. Then, after combination in the second mixer 132, an output signal 136 is digitised in an analog-to-digital (A/D) converter 138, with a resultant digital output signal 140 provided to a channel decoder 142 via a channel equaliser 146. An output from the channel decoder 142 represents an intermediate frequency (IF) input signal 146 that is provided to the base station 94. In the receiver chain 96, the RF receive circuitry 102 is represented by amplifier 128, second mixer 132, second oscillator 134, A/D converter 138 and equaliser 144.

As will be understood, use of either one of the transmitter chain 96 or the receiver chain 98 in isolation is sufficient to realise either a transmitter or a receiver; neither of which strictly require the use of the antenna switch 124.

Referring to the figure, it can bee seen that the interface 92 between the RCU 90 and the base station 94 is realised by a partition after the channel coder 104 and the channel decoder 142, i.e. at a baseband data rate of the intermediate frequency signals 106 and 146 (typically, 270k symbols per second (sps) for GSM). Furthermore, as will be appreciated, the data rate between the equaliser 144 and the channel decoder (in the receive chain 98) will be either 270k sps at 1 bit for hard-decision data or 270k sps at 4 bits for soft-decision data, whereas the data rate between the channel coder 104 and the modulator 110 will be 270k sps at 1 bit. Additionally, the data rate between the A/D converter 138 and the equaliser 144 for the GSM cellular communication system is represented by a 4 times over-sampling of 8 bits at 270k symbols per second.

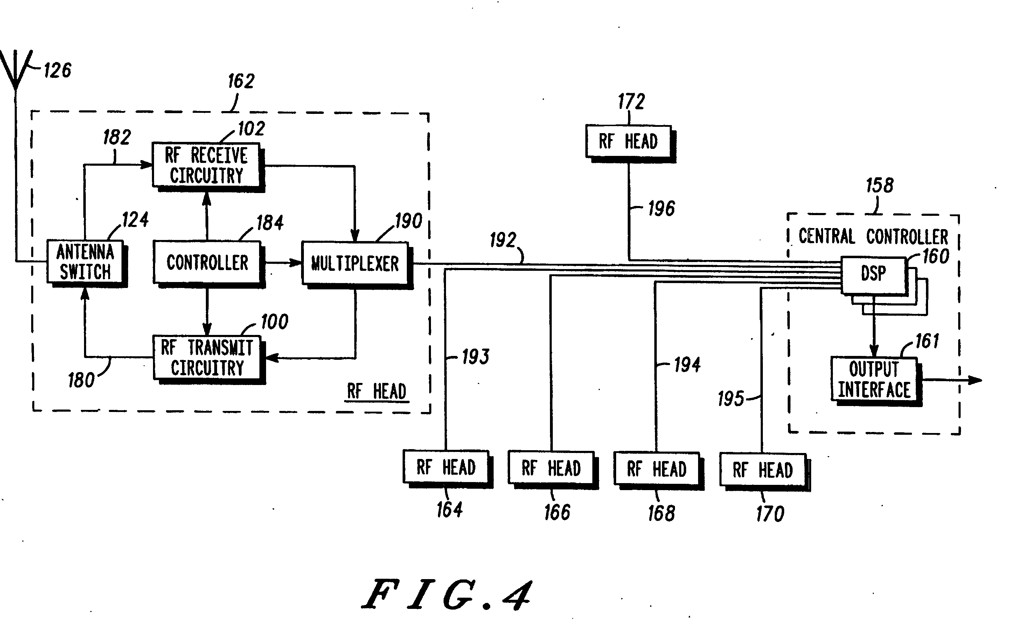

In accordance with a preferred embodiment of the present invention, FIG. 4 illustrates a division of functional responsibilities between a central control unit 158 and at least one remote radio unit ("RF head") of a communication system 159. The central control unit contains at least one processing unit 160 (such as a DSP) that is arranged to accommodate all channel coding and channel decoding for the at least one remote RF head of the communication system 160. The DSP 160 (or the bank of DSPs, if required) is coupled to an output interface 161 of the central control unit 158 to allow access to necessary system information or system communication. In fact, in the preferred embodiment, multiple channel coding and multiple channel decoding is performed on a single DSP.

In this specific instance of FIG. 4, the communication system 160 has been shown with six identical RF heads 162-172, only one (RF head 162) of which has been shown in exploded detail. Basically, each RF head 162-172 comprises a transmitter chain 180, a receiver chain 182 and an antenna switch 124 for selectively coupling the transmitter chain 180 and the receiver chain 182 to the antenna 126. The transmitter chain 180 and the receiver chain 182 respectively contain RF transmit circuitry 100 and RF receive circuitry 102 (including the channel equaliser), as previously described in relation to FIG. 3. Furthermore, each RF head contains a controller 184, such as a microprocessor, for operational control of the RF transmit circuitry 100 and the RF receive circuitry 102. Additionally, a multiplexer 190, also operationally response to the controller 184, selectively provides a gateway over a communication resource 192 (and communication resources 193-196 for RF heads 164-172, respectively) to allow information flow between each RF head the central control unit 158.

In the preferred embodiment, the communication resource 192 is a twisted-pair, High Density Subscriber Line (HDSL) that allows duplex multiplexing at 768k symbols per second. The communication resource also allows multiplexing of control channel information, the requirement for which will be understood.

As such, the communication system of the preferred embodiment of the present invention is partitioned at a point in a conventional BTS where the data rate in the receive path is ∼270k sps and the data rate in the transmit rate is ∼270k sps, whereby the central control unit 158 is arranged to undertake signal processing intensive (and hence power intensive) channel coding and channel decoding for each of the RF heads, while the RF heads contain, principally, only RF circuitry required for communication. At this point, demodulated data is at the baseband rate with one or more bits per symbol.

To maintain synchronisation between the various RF heads 162-172 and the central control unit 158, the preferred embodiment of the present invention utilises the time-correction facility provided by the HDSL communication resource. This time-correction facility allows for the correction of propagation delays that arise because of the varying lengths of the HDSL between the RF heads 162-172 and the central control unit 158. More particularly, the preferred embodiment of the present invention contemplates the periodic transmission of a synchronisation word in an identified time-slot of the HDSL link. For example, time-slot zero (of the twelve available on the HDSL) may be utilised on an hourly basis. As will be appreciated, some form of synchronisation is required because equalised data associated with a time-slot of a TDM frame (for example) must be decoded with reference to a time-slot number. Therefore, partitioning of the communication system 159 in accordance with the preferred embodiment of the preferred embodiment has the effect of cloaking the time-slot number from the channel equaliser. Furthermore, with particular regard to GSM, there is a need to have the ability to synchronise transmissions between sites.

As will be appreciated, the present invention is particularly suited for adoption in a pico-cellular environment (such as within floors of buildings in which sites (or cells) have communication coverage areas of a few hundred metres or less) because each radio channel unit (RF head) is less complex, smaller and relatively inexpensive to manufacture in comparison with conventional RCUs having channel coding and decoding circuitry. Indeed, the present invention provides a low power radio unit with a single-line interface.

It will, of course, be understood that the above description has been given by way of example only and that modifications in detail, such as the number of RF heads serviced by a single central control unit, may be made within the scope of the present invention. Indeed, although the RF heads of FIG. 4 have been described in relation to a transceiver, the present invention is clearly applicable to separate receivers or transmitters, with the skilled addressee appreciating the mere need for the elimination of either a receiver chain or a transmitter chain from the illustrated RF head configuration. Furthermore, other forms of communication resource (192-196) may be substituted, e.g. coaxial cables, fibre-optic links, E1 links (i.e. European or (CBPT1) 32 x 64k bps leased lines) or radio links). In all cases, the communication resources 192-196 allow interleaving of coded baseband data from the central control unit 158 to the RF heads (162-172).

## Claims

1. A communication system (160) having a central control unit (158) and at least one remote radio frequency unit (162-172) interacting with the central control unit (158), wherein the central control unit (158) comprises at least one processing unit (104, 142) responsible for processing a channel decoding function for the at least one remote radio frequency unit (162-172), and **characterized in that** the remote radio frequency unit (162-172) comprises an equaliser (144) for partially processing information signals received by it.

2. The communication system (160) as claimed in claim 1, wherein each processing unit (104, 142) of the at least one processing unit is arranged to perform multiple channel coding and multiple channel decoding.

3. The communication system (160) as claimed in any preceding claim, wherein the communication system (160) is a pico-cellular communication system.

4. The communication system (160) as claimed in any preceding claim, wherein the at least one remote radio frequency unit (162-172) is a transceiver.

5. The communication system (160) as claimed in any preceding claim, wherein the at least one radio frequency unit (162-172) is a receiver.

6. A remote radio frequency transceiver unit (162-172) for reception of information signals, comprising means for selectively interacting with a central control unit (158) to allow at least one of channel coding and channel decoding of the information signals to occur at the central control unit (158) and **characterised by** further comprising an equaliser (144) for partially processing the information signals for reception.

## Patentansprüche

1. Kommunikationssystem (160) mit einer zentralen Steuereinheit (158) und wenigstens einer Fern-Hochfrequenzeinheit (162-172), die mit der zentralen Steuereinheit (158) zusammenwirkt, wobei die zentrale Steuereinheit (158) wenigstens eine Verarbeitungseinheit (104, 142) umfasst, die für die Durchführung einer Kanaldekodierungsfunktion für die wenigstens eine Fern-Hochfrequenzeinheit (162-172) verantwortlich ist, **dadurch gekennzeichnet, dass** die Fern-Hochfrequenzeinheit (162-172) einen Entzerrer ("equaliser") (144) zur partiellen Verarbeitung von durch sie empfangenen Informationssignalen aufweist.

2. Kommunikationssystem (160) nach Anspruch 1, bei dem jede Verarbeitungseinheit (104, 142) der wenigstens einen Verarbeitungseinheit so angeordnet ist, dass eine Mehrkanalkodierung und eine Mehrkanaldekodierung ermöglicht ist.

3. Kommunikationssystem (160) nach Anspruch 1 oder 2, bei dem das Kommunikationssystem (160) ein pikozellulares Kommunikationssystem ist.

4. Kommunikationssystem (160) nach einem der vorangehenden Ansprüche, bei dem die wenigstens eine Fern-Hochfrequenzeinheit (162-172) ein Sender-Empfänger ist.

5. Kommunikationssystem (160) nach einem der vorangehenden Ansprüche, bei dem die wenigstens eine Fern-Hochfrequenzeinheit (162-172) ein Empfänger ist.

6. Fern-Hochfrequenz-Sender-/Empfängereinheit (162-172) zum Empfangen von Informationssignalen, die Einrichtungen zum selektiven Zusammenwirken mit einer zentralen Steuereinheit (158) aufweist, um zumindest das Auftreten einer Kanalkodierung und/oder einer Kanaldekodierung der Informationssignale bei der zentralen Steuereinheit (158) zu ermöglichen, **dadurch gekennzeichnet, dass** ein Entzerrer (144) zur partiellen Verarbeitung des Informationssignals zum Empfang vorgesehen ist.

## Revendications

1. Système de communication (160) qui comporte une unité de commande centrale (158) et au moins une unité de fréquence radio à distance (162-172) qui interagit avec l'unité de commande centrale (158), dans lequel l'unité de commande centrale (158) comprend au moins une unité de traitement (104, 142) qui est responsable du traitement d'une fonction de décodage de canal pour l'au moins une unité de fréquence radio à distance (162-172), et **caractérisé en ce que** l'unité de fréquence radio à distance (162-172) comprend un égaliseur (144) pour traiter partiellement des signaux d'information qui sont reçus par elle.

2. Système de communication (160) selon la revendication 1, dans lequel chaque unité de traitement (104, 142) de l'au moins une unité de traitement est agencée pour réaliser un codage multicanal et un décodage multicanal.

3. Système de communication (160) selon l'une quelconque des revendications précédentes, dans lequel le système de communication (160) est un système de communication pico-cellulaire.

4. Système de communication (160) selon l'une quelconque des revendications précédentes, dans lequel l'au moins une unité de fréquence radio à distance (162-172) est un émetteur récepteur.

5. Système de communication (160) selon l'une quelconque des revendications précédentes, dans lequel l'au moins une unité de fréquence radio (162-172) est un récepteur.

6. Unité d'émetteur-récepteur de fréquence radio à distance (162-172) pour la réception de signaux d'information, comprenant un moyen pour interagir de façon sélective avec une unité de commande centrale (158) afin de permettre qu'au moins un traitement pris parmi un codage de canal et un décodage de canal des signaux d'information soit réalisé au niveau de l'unité de commande centrale (158), et **caractérisée en ce qu'**elle comprend en outre un égaliseur (144) pour traiter partiellement les signaux d'information pour une réception.
